# EUROPÄISCHE PATENTSCHRIFT

(11) **EP 0 433 568 B1**
(45) Veröffentlichungstag und Bekanntmachung des Hinweises auf die Patenterteilung: **04.08.1993**
(21) Anmeldenummer: 90117993.7
(22) Anmeldetag: 19.09.1990
(51) Int. Cl.: B60H 1/00

(54) **Als Brüstung ausgebildeter fensterseitiger Abschluss**
Lateral seal, shaped like a sill, for a window
Bordure de vitre latérale en forme d'appui de fenêtre

(30) Priorität: 18.12.1989 DE 3941696
(43) Veröffentlichungstag der Anmeldung: 26.06.1991
(73) Patentinhaber: MERCEDES-BENZ AG, 70327 Stuttgart (DE)
(72) Erfinder: Kalt, Hans-Peter, D-7036 Schönaich (DE); Lüders, Michael, D-7046 Gäufelden (DE); Schanzer, Hans-Peter, D-7120 Bietiheim-Bissingen (DE)

(56) Entgegenhaltungen:
- DE-U- 8 809 007
- FR-A- 2 462 319
- PATENT ABSTRACTS OF JAPAN, Band 13, Nr. 206 (M-826)[3554], 16. Mai 1989; & JP-A-130 828 (NIPPON DENSO CO., LTD) 01-02-1989

## Beschreibung

Die Erfindung betrifft einen als Brüstung ausgebildeten fensterseitigen Abschluß von aufeinanderfolgenden, bis zu einem in Scheibenhöhe verlaufenden Längsträger hochgezogenen, verkleideten und sich an diesem abstützenden Flächenheizkörpern zur Heizung der inneren Seitenwand in einem Omnibus.

Eine derartige Anordnung, bei der der Flächenheizkörper oberseitig am Längsträger befestigt ist, kann dem DE-U-88 09 007 als bekannt entnommen werden. Damit eine derartige Verbindung unter Vermeidung des Auftretens von Wärmebrücken und dem damit verbundenen unbeabsichtigten Wärmeabfluß erreicht wird, bedarf es eines hohen Aufwandes. Durch das Hochziehen des Flächenheizkörpers bis auf Höhe der Scheibenunterkante erreicht man eine als angenehm empfundene Erwärmung des dem Fahrgast zugekehrten Brüstungsbereiches, jedoch bleibt der Abschnitt zwischen zwei aufeinanderfolgenden Flächenheizkörpern unaufgeheizt. Dies macht sich insbesondere dann unangenehm bemerkbar, wenn durch Änderung der Sitzreihenzahl dem fensterseitig sitzenden Fahrgast ein derartiger, nicht temperierter Abschnitt zugekehrt ist.

Aufgabe der Erfindung ist es, eine zum Austausch einzelner Flächenheizkörper leicht lösbare obere Befestigung zu schaffen, die wärmebrückenfrei ist und die sicherstellt, daß der Brüstungsbereich durchgehend erwärmt wird.

Diese Aufgabe wird bei einer Brüstung nach dem Oberbegriff des Patentanspruches 1 durch dessen kennzeichnende Merkmale gelöst.

Der Brüstungsbereich ist auch oberseitig erwärmbar, wenn der erste Teil einen wärmeleitenden, ein Verkleidungsteil aufnehmenden Grundkörper aufweist, der wärmeisoliert, z.B. durch Kleben mit dem Längsträger verbunden ist und wenn beim Festlegen der Grundplatte am Grundkörper über die Grundplatte eine wärmeleitende Verbindung zum Grundkörper geschaffen wird.

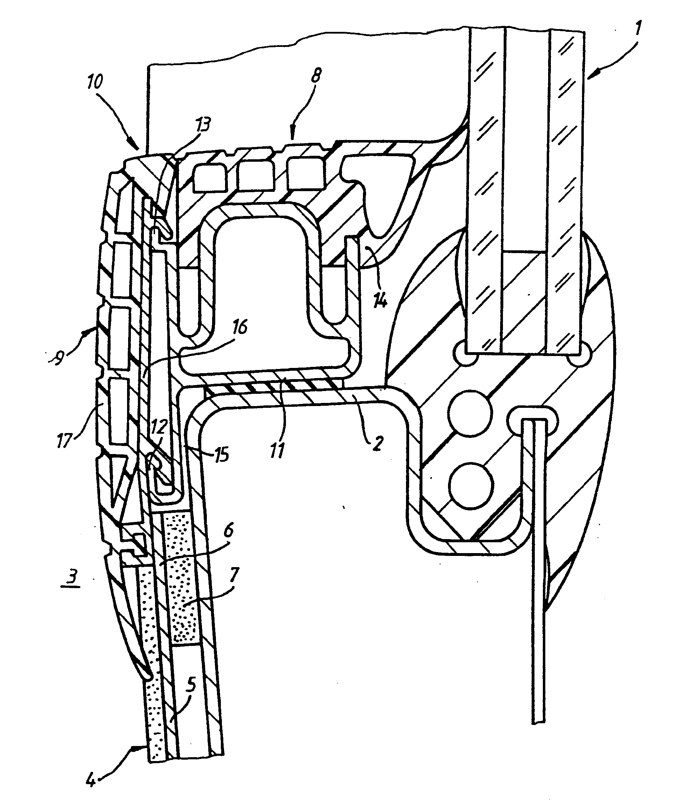

Ein Ausführungsbeispiel der Erfindung wird nachfolgend anhand der Zeichnung näher erläutert.

Die Darstellung zeigt einen Vertikalschnitt durch den Brüstungsbereich eines nicht näher dargestellten Omnibusses, der sich, einer Scheibe 1 zugeordnet, im wesentlichen oberhalb eines nur teilweise wiedergegebenen Längsträgers 2 erstreckt. Zum Aufheizen der dem Fahrgastraum 3 zugekehrten inneren Seitenwand 4 sind hintereinander angeordnete Flächenheizkörper 5 vorgesehen, von denen nur der obere Randbereich 6 eines Flächenheizkörpers 5 ersichtlich ist. Der obere Randbereich 6 des zum Innenraum 3 hin verkleideten Flächenheizkörpers 5, der z.B. als kühlwasserdurchflossene Heizplatte oder auch als Heat-Pipe ausgebildet sein kann, liegt an einem vom Längsträger 2 aufgenommenen Streifen aus einem elastischen Dämmstoff 7 an.

Eine aus einem ersten Teil 8 und einem zweiten Teil 9 bestehende Brüstungsleiste 10 deckt den oberen Randbereich 6 und den Längsträger 2 nach oben hin ab, wobei der erste Teil 8 einen abschnittsweise über die Länge der jeweils zugeordneten Scheibe 1 reichenden und z.B. durch Kleben oberseitig mit dem Längsträger 2 verbundenen Grundkörper 11 mit Aufnahmen 12 und 13 aufweist, der durch ein sich am Grundkörper 11 abstützendes Verkleidungsteil 14 überdeckt ist. Vorderseitig des Längsträgers 2 ist zwischen diesem und dem Grundkörper 11 ein Luftspalt 15 belassen.

Die Aufnahmen 12 und 13 am Grundkörper 11 dienen der lösbaren Festlegung einer leistenförmigen Grundplatte 16, die einen Bestandteil des zweiten Teils 9 der Brüstungsleiste 10 bildet. Zum Fahrgastraum 3 hin ist die Grundplatte 16 durch ein Verkleidungsteil 17 abgedeckt. Der Grundkörper 11 und die Grundplatte 16 bestehen aus wärmeleitendem, insbesondere metallischem Material, während die Verkleidungsteile 14 und 17 aus einem begrenzt wärmeisolierenden Material wie Kunststoff gefertigt sind.

Beim Absenken der Grundplatte 16 kommt diese in wärmeleitende Verbindung mit dem oberen Randbereich 6 des Flächenheizkörpers 5, wobei durch die Elastizität des komprimierten Dämmstoffes 7 eine dauerhafte Anlage erreicht wird. Die Grundplatte 16 erwärmt sich bei eingeschalteter Flächenheizung und auch der Grundkörper 11, der wärmeisoliert gegenüber dem Längsträger 2 angeordnet ist, wird über die Grundplatte 16 mit Wärme versorgt, so daß an der Außenseite der Brüstungsleiste 10 durchgehend eine von dem zugeordneten Passagieren als angenehm empfundene Erwärmung eintritt.

## Patentansprüche

1. Als Brüstung ausgebildeter fensterseitiger Abschluß von aufeinanderfolgenden, bis zu einem in Scheibenhöhe verlaufenden Längsträger (2) hochgezogenen, verkleideten und sich an diesem abstützenden Flächenheizkörpern (5) zur Heizung der inneren Seitenwand (4) in einem Omnibus,
**dadurch gekennzeichnet,**
daß eine aus zwei Teilen (8, 9) bestehende Brüstungsleiste (10) vorgesehen ist, deren erster Teil (8) abschnittsweise über die Länge der jeweils zugeordneten Scheibe (1) mit dem Längsträger (2) verbunden ist und auf seiner dem Fahrgastraum (3) zugekehrten Seite Aufnahmen (12, 13) zur lösbaren Befestigung des die einzelnen ersten Teile (8) miteinander verbindenden zweiten Teils (9) aufweist und dieser Teil (9) aus einer wärmeleitenden, ein Verkleidungsteil (17) aufnehmenden Grundplatte (16) besteht, und daß beim Befestigen der Grundplatte (16) diese in fortlaufende wärmeleitende Verbindung mit dem oberen, sich unter Zwischenschaltung eines elastischen Dämmstoffes (7) am Längsträger (2) abstützenden Randbereich (6) des jeweils zugeordneten Flächenheizkörpers (5) gebracht wird.

2. Fensterseitiger Abschluß nach Anspruch 1,
**dadurch gekennzeichnet,**
daß der erste Teil (8) einen wärmeleitenden, ein Verkleidungsteil (14) aufnehmenden Grundkörper (11) aufweist, der wärmeisoliert, z.B. durch Kleben mit dem Längsträger (2) verbunden ist, und daß beim Festlegen der Grundplatte (16) am Grundkörper (11) über die Grundplatte (16) eine wärmeleitende Verbindung zum Grundkörper (11) geschaffen wird.

## Claims

1. Constructed as a window-ledge, the window-side closure of successive panel heaters (5) for heating the inner side wall (4) in a motor-bus and which are clad and extended upwardly as far as and are supported on a longitudinal member (2) extending at window pane height, characterised in that a window-ledge strip (10) consisting of two parts (8, 9) is provided, its first part (8) being connected in portions to the longitudinal member (2) over the length of the relevant window pane (1) and having on its side which is towards the passenger compartment (3) housings (12, 13) for separable fixing of the second part (9) which connects the individual first parts (8) to one another and in that this part (9) consists of a heat-conductive base panel (16) which accommodates a cladding part (17), and in that upon fixing of the base panel (16), this latter is brought into continuous heat-conductive connection with the upper marginal portion (6) of the respectively associated panel heater (5) which is supported on the longitudinal member (2) through an interposed resilient insulating material (7).

2. A window-side closure according to Claim 1, characterised in that the first part (8) has a heat-conductive base member (11) accommodating a cladding part (14) and connected in heat-insulating manner, e.g. by adhesion, to the longitudinal member (2), and in that when the base panel (16) is fixed on the base member (11), a heat-conductive connection with the base member (11) is established via the base panel (16).

## Revendications

1. Bordure, côté fenêtre, en forme d'appui de fenêtre, de radiateurs plats (5) successifs, élevés jusqu'à un longeron (2) courant à hauteur de la vitre, habillés et s'appuyant sur ce longeron, pour le chauffage de la paroi latérale intérieure (4) dans un autobus,
bordure caractérisée
par le fait qu'est prévu un appui de fenêtre filant (10) constitué de deux parties (8, 9) dont la première partie (8) est reliée, par tronçons, sur la longueur de la vitre respectivement correspondante (1), avec le longeron (2) et présente, sur sa face orientée vers l'espace (3) des passagers, des supports (12, 13) pour y fixer, de façon amovible, la seconde partie (9) qui relie les unes aux autres les différentes premières parties (8), partie (9) qui est constituée d'une plaque de base (16) recevant une pièce d'habillage (17) conductrice de la chaleur, et par le fait qu'en fixant la plaque de base (16), on amène celle-ci en liaison continue, conductrice de la chaleur, avec la zone de bordure supérieure (6), s'appuyant sur le longeron (2) avec interposition d'un matériau amortisseur élastique (16), du radiateur plat (5) respectivement correspondant.

2. Bordure côté fenêtre selon la revendication 1,
caractérisée
par le fait que la première partie (8) présente un élément de base (11) qui est conducteur de la chaleur, qui supporte une pièce d'habillage (14) et qui est relié, de façon thermiquement isolante, par exemple par collage, avec le longeron (2), et par le fait qu'en fixant la plaque de base (16) à l'élément de base (11) on crée le long de la plaque de base (16) une liaison thermiquement conductrice avec l'élément de base (11).
